# EUROPEAN PATENT SPECIFICATION

(11) **EP 4 089 381 B1**
(45) Date of publication and mention of the grant of the patent: **24.01.2024**
(21) Application number: 21779344.7
(22) Date of filing: 01.02.2021
(51) Int. Cl.: G01K 1/143, G01K 7/22, G01K 1/02, H01C 1/14, H01C 7/00

(54) **TEMPERATURE SENSOR AND TEMPERATURE SENSOR ARRAY**
TEMPERATURSENSOR UND TEMPERATURSENSORANORDNUNG
CAPTEUR DE TEMPÉRATURE ET ENSEMBLE DE CAPTEURS DE TEMPÉRATURE

(30) Priority: 31.03.2020 JP 2020064343
(43) Date of publication of application: 16.11.2022
(73) Proprietor: Murata Manufacturing Co., Ltd., Nagaokakyo-shi, Kyoto 617-8555 (JP)
(72) Inventor: FUNAHASHI, Shuichi, Nagaokakyo-shi, Kyoto 617-8555 (JP); IDE, Hiroaki, Nagaokakyo-shi, Kyoto 617-8555 (JP); FUKUTANI, Tatsuya, Nagaokakyo-shi, Kyoto 617-8555 (JP); AOKI, Norihisa, Nagaokakyo-shi, Kyoto 617-8555 (JP); TSUNODA, Masakazu, Nagaokakyo-shi, Kyoto 617-8555 (JP)
(74) Representative: Frick, Robert
(86) International application number: PCT/JP2021/003499
(87) International publication number: WO 2021/199647

(56) References cited:
- JP-A- 2015 129 731
- JP-A- 2019 074 326
- JP-A- 2019 074 326
- US-A1- 2013 182 745
- US-A1- 2013 288 091

## Description

### TECHNICAL FIELD

The present invention relates to a temperature sensor and a temperature sensor array including a plurality of the temperature sensors.

### BACKGROUND ART

Conventionally, a temperature sensor including a sensor unit formed on a flexible substrate is known. Such a temperature sensor can be configured to be flexible and thin as a whole, and is used in various applications for detecting a temperature of an object whose temperature is to be detected.

For example, Patent Document 1 discloses a temperature sensor in which an opening is provided in a flexible substrate, a flexible thermistor is embedded and mounted as a sensor unit in the opening, and a height of a surface around the opening of the flexible substrate and a height of an exposed surface of the flexible thermistor are substantially the same. More specifically, for example, referring to FIG. 5 of Patent Document 1, a flexible thermistor 1A having a metal substrate 11, a thermistor layer 15, and a pair of divided electrodes 21 and 22 is embedded in an opening of a flexible substrate 5A having a base layer 51, a wiring conductor layer 52, and a cover layer 53, and mounted on the wiring conductor layer 52 by a solder layer 54, and a height of a surface of the cover layer 53 and a height of an exposed surface of the flexible thermistor 1A are made substantially the same.

For example, Patent Document 2 discloses a temperature sensor in which a thin film thermistor section and a pair of comb-shaped electrodes are provided as sensor units on a surface of an insulating film that is a flexible substrate, and at least a part of the insulating film immediately below the thin film thermistor section is formed to be thinner than the other part of the insulating film. More specifically, for example, with reference to FIG. 1 of Patent Document 2, a thin film thermistor section 3 and a pair of comb-shaped electrodes 4 are provided on a surface of an insulating film 2, covered with a protective film 6, and a recess 2a is provided immediately below the thin film thermistor section 3 in the insulating film 2.

For example, Patent Document 3 discloses a temperature sensor unit 20 comprising a temperature sensor 40 mounted on a flexible printed circuit (FPC) 30. A first metal plate member 60 is fixed on the lower surface of the FPC 30, an elastic member 50 is disposed close to the periphery of the temperature sensor 40 and a second metal plate 70 is bonded to the upper surface of the elastic member 50. When the sensor unit 20 is inserted into the housing portion 14, the elastic force of the elastic member 50 presses the temperature sensor 40 against the surface of the object 10 whose temperature is to be measured.

### PRIOR ART DOCUMENT

### PATENT DOCUMENTS

Patent Document 1: WO 2012/093572 A
Patent Document 2: Japanese Patent Application Laid-Open No. 2016-90262
Patent Document 3: JP 2019 074326 A
Patent Document 4: WO 2019/009320 A

### SUMMARY OF THE INVENTION

### Problem to be solved by the invention

A load can be applied in a thickness direction of the temperature sensor including the sensor unit formed on the flexible substrate. In order to achieve high temperature detection accuracy, it is preferable to bring the temperature sensor into sufficient contact with an object whose temperature is to be detected with a certain degree of force. However, when a load is applied to the sensor unit of the temperature sensor, a stress generated in the sensor unit (more specifically, the thermistor layer) may cause a change in resistance due to deformation of the sensor unit and deterioration due to occurrence of a crack in the sensor unit, which may rather cause a decrease in temperature detection accuracy. Under such circumstances, there is a demand for a temperature sensor that is excellent in load bearing capability and can obtain high temperature detection accuracy.

In the temperature sensor disclosed in Patent Document 1, since the height of the surface around the opening of the flexible substrate and the height of the exposed surface of the flexible thermistor are substantially the same, when a load is applied to such a temperature sensor in the thickness direction, more specifically, when the temperature sensor is brought into contact with and pressed against the object whose temperature is to be detected as illustrated in FIG. 7 of Patent Document 1, the load (pressing force) is uniformly applied over the entire contact region (sum of the entire region of the exposed surface of the flexible thermistor and the contact region of the surface of the flexible substrate therearound) between the temperature sensor and the object whose temperature is to be detected, so that it is possible to avoid application only to the exposed surface of the flexible thermistor. However, since the load is applied to the flexible thermistor (in particular, the thermistor layer) according to a ratio of an area of the exposed surface of the flexible thermistor to the entire area of the contact region, it is not possible to eliminate generation of stress in the thermistor layer, sufficient load bearing capability cannot be necessarily obtained, the change in resistance due to deformation of the thermistor layer and deterioration due to occurrence of a crack in the thermistor layer may occur, and it is difficult to obtain high temperature detection accuracy. Focusing only on the improvement of the load bearing capability, it is conceivable to considerably increase the area of the contact region of the other portion with respect to the area of the exposed surface of the flexible thermistor. However, in this case, the area of the contact region of the other portion becomes too large, and heat of the object whose temperature is to be detected (heat source) is conducted to wire, a surface opposite to the contact surface, and the like via the other portion and lost, so that high temperature detection accuracy cannot be obtained still.

In the temperature sensor disclosed in Patent Document 2, since at least a part of the insulating film immediately below the thin film thermistor section is formed to be thinner than the other part of the insulating film (the recess is provided), when a load is applied to such a temperature sensor in the thickness direction, more specifically, when the temperature sensor (thin film thermistor section side) is brought into contact with and pressed against the object whose temperature is to be detected, the load (pressing force) can be prevented from being directly applied to the thin film thermistor section in the thickness direction. However, since the load acts on the thin film thermistor section in a direction horizontal to the in-plane direction of the insulating film (in particular, when the upper surfaces and the entire peripheries of the thin film thermistor section and the pair of comb-shaped electrodes are covered with the protective film, the load remarkably acts in the horizontal direction), it is not possible to eliminate the generation of stress in the thin film thermistor section, sufficient load bearing capability cannot be necessarily obtained, the change in resistance due to deformation of the thin film thermistor section and deterioration due to generation of a crack in the thin film thermistor section may occur, and it is difficult to obtain high temperature detection accuracy. In addition, the heat of the object whose temperature is to be detected (heat source) may be conducted through the entire temperature sensor and lost, and high temperature detection accuracy cannot be obtained.

An object of the present invention is to provide a temperature sensor that is excellent in load bearing capability and can obtain high temperature detection accuracy. A further object of the present invention is to provide a temperature sensor array including a plurality of such temperature sensors.

### Means for solving the problem

According to one aspect of the present invention, there is provided a temperature sensor including a sensor unit formed on a flexible substrate, in which the flexible substrate includes a first portion which is located at an end portion of the flexible substrate and in which the sensor unit is formed, and a second portion adjacent to the first portion in a distal direction from the end portion and having a maximum thickness between a first surface and a second surface facing each other, a surface of the first portion opposite to the sensor unit and the first surface of the second portion are on the same plane, at least the first surface of the second portion forms a detection surface in contact with an object whose temperature is to be detected, and a total thickness of the first portion and the sensor unit is smaller than the maximum thickness of the second portion.

According to another aspect of the present invention, there is provided a temperature sensor array including a plurality of the temperature sensors of the present invention, the plurality of temperature sensors being connected to a common connection at or near an end portion of the flexible substrate opposite to the first portion.

### Advantageous effect of the invention

According to the present invention, there is provided a temperature sensor that is excellent in load bearing capability and can obtain high temperature detection accuracy. Furthermore, according to the present invention, there is provided a temperature sensor array including a plurality of such temperature sensors, and the same effects as those described above can be obtained.

### BRIEF EXPLANATION OF DRAWINGS

FIG. 1 is an outline schematic sectional view of a temperature sensor according to one embodiment of the present invention.
FIG. 2 is an outline schematic sectional view for explaining a usage mode of the temperature sensor according to the embodiment of FIG. 1.
FIG. 3 is an outline schematic sectional view of a temperature sensor according to another embodiment of the present invention.
FIG. 4 is an outline schematic sectional view for explaining the usage mode of the temperature sensor according to the embodiment of FIG. 2.
FIG. 5 is an outline schematic sectional view for explaining the usage mode of a modification example of the temperature sensor according to the embodiment of FIG. 2.
FIG. 6 (a) is an outline schematic sectional view for explaining the usage mode of a modification example of the temperature sensor according to the embodiment of FIG. 1, and FIG. 6 (b) is an outline schematic sectional view for explaining the usage mode of the modification example of the temperature sensor according to the embodiment of FIG. 2.
FIG. 7 is an outline schematic sectional view of a temperature sensor according to another embodiment of the present invention.
FIGS. 8 (a) and 8 (b) are views illustrating one specific example of the temperature sensor according to the embodiment of FIG. 7, in which FIG. 8 (a) is an outline schematic sectional view taken along a line Z-Z in FIG. 8 (b), and FIG. 8 (b) is an outline schematic top view illustrating an internal structure in a transparent manner.
FIGS. 9 (a) and 9 (b) are views illustrating another specific example of the temperature sensor according to the embodiment of FIG. 7, in which FIG. 9 (a) is an outline schematic sectional view taken along a line Z-Z in FIG. 9 (b), and FIG. 9 (b) is an outline schematic top view illustrating an internal structure in a transparent manner.
FIGS. 10 (a) and 10 (b) are views illustrating another specific example of the temperature sensor according to the embodiment of FIG. 7, in which FIG. 10 (a) is an outline schematic sectional view taken along a line Z-Z in FIG. 10 (b), FIG. 10 (b) is an outline schematic top view illustrating an internal structure in a transparent manner, and FIG. 10 (c) is an outline schematic top view illustrating only an electrode and an extended electrode portion.
FIGS. 11 (a) and 11 (b) are views illustrating another specific example of the temperature sensor according to the embodiment of FIG. 7, in which FIG. 11 (a) is an outline schematic sectional view taken along a line Z-Z in FIG. 11 (b), FIG. 11 (b) is an outline schematic top view illustrating an internal structure in a transparent manner, and FIG. 11 (c) is an outline schematic top view illustrating only the electrode and the extended electrode portion.
FIG. 12 is an outline schematic top view illustrating a temperature sensor array according to one embodiment of the present invention, and is a view illustrating an internal structure excluding a sensor unit and a first portion in a transparent manner.
FIG. 13 is an outline schematic perspective view for explaining a usage mode of the temperature sensor array according to the embodiment of FIG. 12, and is a view illustrating a part of an internal structure in a transparent manner.
FIG. 14 (a) is an outline schematic top view illustrating patterns of a comb-shaped electrode and an extended electrode portion in the temperature sensor array produced in Comparative Example 1, and FIG. 14 (b) is an outline schematic top view of the temperature sensor array produced in Comparative Example 1.
FIG. 15 (a) is a graph illustrating a result of a load test of Comparative Example 1, and FIG. 15 (b) is a graph illustrating a result of the load test of Example 1.
FIG. 16 (a) is an outline schematic top view illustrating the patterns of the comb-shaped electrode and the extended electrode portion in the temperature sensor array produced in Comparative Example 2, and FIG. 16 (b) is an outline schematic top view of the temperature sensor array produced in Comparative Example 2.
FIG. 17 (a) is an outline schematic top view illustrating the patterns of the comb-shaped electrode and the extended electrode portion in the temperature sensor array produced in Example 1, and FIG. 17 (b) is an outline schematic top view of the temperature sensor array produced in Example 1.

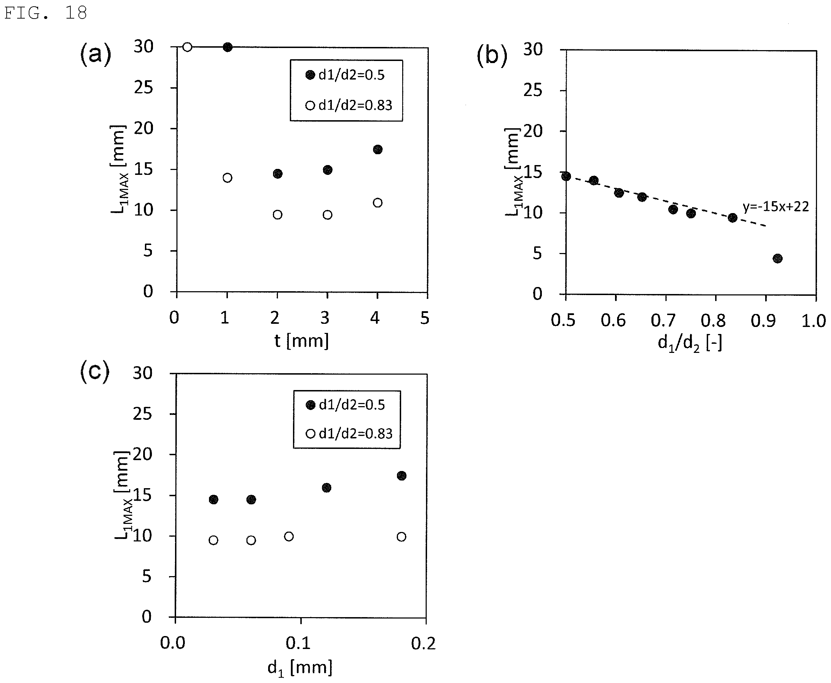

FIG. 18 is a graph illustrating a result of examining L_{1MAX} in which a load of 10 MPa or more is not applied to the sensor unit when a thickness t of a facing object (metal plate), a total thickness d₁ of the first portion and the sensor unit, a maximum thickness d₂ of the second portion, and a thickness ratio d₁/d₂ are variously changed in a test of Example 2, in which FIG. 18 (a) is a graph illustrating a relationship between L_{1MAX} and t when d₁ = 0.06 mm and d₁/d₂ = 0.5 or 0.83, FIG. 18 (b) is a graph illustrating a relationship between L_{1MAX} and d₁/d₂ when t = 2.0 mm and d₁ = 0.06 mm, and FIG. 18 (c) is a graph illustrating a relationship between L_{1MAX} and d₁ when t = 2.0 mm and d₁/d₂ = 0.5 or 0.83.
FIG. 19 (a) is an outline schematic top view illustrating the patterns of the comb-shaped electrode and the extended electrode portion in the temperature sensor array produced in Example 3, and FIG. 19 (b) is an outline schematic top view of a thermistor element produced in Example 3.

### MODE FOR CARRYING OUT THE INVENTION

Hereinafter, the present invention will be described in detail through a plurality of embodiments with reference to the drawings, but the present invention is not limited to these embodiments.

### (Embodiment 1)

The present embodiment relates to a temperature sensor including a sensor unit formed on a flexible substrate.

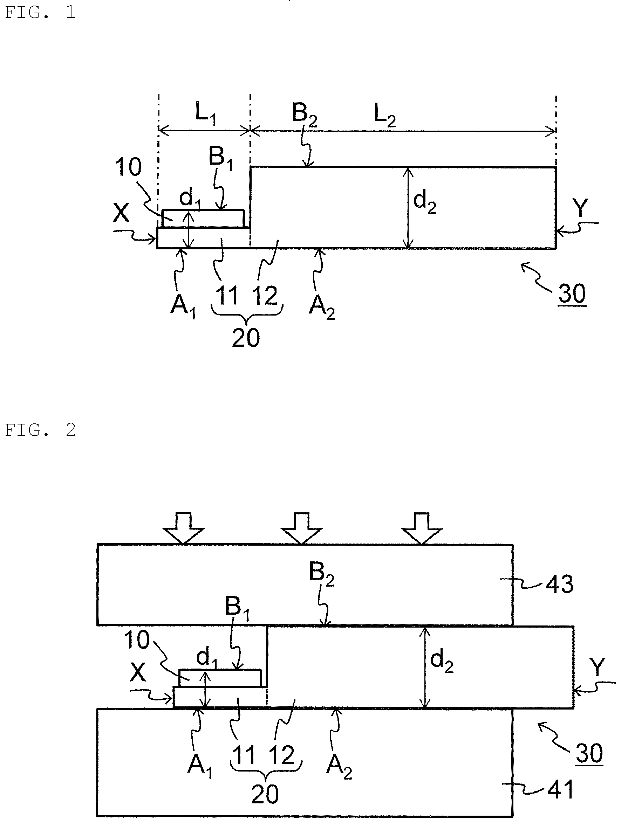

Referring to FIG. 1, in a temperature sensor 30 of the present embodiment, a flexible substrate 20 includes a first portion 11 which is located at one end portion X of the flexible substrate 20 and on which a sensor unit 10 is formed, and a second portion 12 which is adjacent to the first portion 11 in a distal direction from the end portion X and has a maximum thickness d₂ between a first surface A₂ and a second surface B₂ facing each other. In the present invention, the "maximum thickness" means the maximum thickness in the entire temperature sensor. The phrase that the second portion is "adjacent to" the first portion "in the distal direction" from the end portion X means that the second portion is adjacent to the first portion in a direction from one end portion X where the first portion exists toward the other end portion Y. In other words, there is no second portion having the maximum thickness d₂ in a direction other than the distal direction with respect to the first portion.

In the temperature sensor 30 of the present embodiment, the sensor unit 10 is formed on the first portion 11, and the surface A₁ of the first portion 11 opposite to the sensor unit 10 and the first surface A₂ of the second portion 12 are on the same plane. In the present invention, the fact that the two surfaces are "on the same plane" means that a common plane is formed in a state where no load (or external force) is applied to the temperature sensor, this shall not apply in a state where a load is applied, and the surface may be curved and/or bent, for example.

In the temperature sensor 30 of the present embodiment, a total thickness d₁ of the first portion 11 and the sensor unit 10 is smaller than the maximum thickness d₂ of the second portion 12, preferably, a ratio of d₁ to d₂ (thickness ratio d₁/d₂) may be 0.83 (= about 5/6) or less, the lower limit is not particularly limited, and may be, for example, 0.1 (= 1/10) or more. The total thickness d₁ of the first portion 11 and the sensor unit 10 is a thickness direction dimension between the surface A₁ of the first portion 11 and an exposed surface B₁ of the sensor unit 10 facing the surface A₁.

The sensor unit 10 is not particularly limited as long as it has a function of detecting a temperature, and may include, for example, a thermistor layer and two electrodes that are in contact with the thermistor layer and are arranged to be spaced apart from each other, and may or may not further include a cover layer (or a protective film). Such a thermistor layer and the two electrodes may be formed from any suitable material, and any suitable structure and arrangement, etc. may be used. As the thermistor layer, for example, a material disclosed in Patent Document 4 and the like can be used. The electrode may be, for example, a pair of comb-shaped electrodes formed in contact with the thermistor layer, a pair of split electrodes arranged in contact with the thermistor layer (and preferably facing a non-connection type internal electrode), or a pair of planar electrodes sandwiching the thermistor layer therebetween. The first portion 11 and the second portion 12 may appropriately include two extended electrode portions extended from the two electrodes of the sensor unit 10, two wires electrically connected to these extended electrode portions, and the like. The electrode and the extended electrode portion may be formed separately, and preferably may be formed integrally. The number of thermistor layers, electrodes, extended electrode portions, and wires may be larger.

The temperature sensor 30 of the present embodiment can be configured to be flexible and thin as a whole. Although the material and the thickness of the flexible substrate 20 responsible for flexibility can be appropriately selected, the maximum thickness d₂ may be preferably 200 um or less, more preferably 100 um or less, and the lower limit is not particularly limited, and may be, for example, 60 um or more.

In the temperature sensor 30 of the present embodiment, the sensor unit 10 is disposed close to the second portion 12. Thus, a length L₁ (dimension between one end portion X (end surface in the illustrated aspect) of the flexible substrate 20 and a boundary between the first portion 11 and the second portion 12) of the first portion 11 is preferably small, and may be, for example, 30 mm or less, particularly 20 mm or less, more preferably 10 mm or less, and optionally 5 mm or less, and the lower limit is not particularly limited, and may be, for example, 1 mm or more. Although the present embodiment is not limited, when d₁/d₂ is 0.83 or less, L₁ may be 9.5 mm or less. On the other hand, a length L₂ (in the present embodiment, a dimension between the boundary between the first portion 11 and the second portion 12 and the other end portion Y (end surface in the illustrated aspect) of the flexible substrate 20) of the second portion 12 is not particularly limited, and may vary depending on the application of the temperature sensor 30.

As illustrated in FIG. 2, the temperature sensor 30 of the present embodiment is used such that at least the first surface A₂ of the second portion 12 is in contact with an object 41 whose temperature is to be detected. In other words, at least the first surface A₂ of the second portion 12 forms a detection surface that comes into contact with the object 41 whose temperature is to be detected (more specifically, the detection surface is pressed against and brought into close contact with the object 41). Although the surface A₁ of the first portion 11 opposite to the sensor unit 10 can also come into contact with the object 41 whose temperature is to be detected (can form a detection surface), the surface A₁ does not necessarily have to come into contact with the object 41, and may "float" from the object 41, for example. In particular, as illustrated in FIG. 2, the temperature sensor 30 can be used in a state of being pressed between the object 41 whose temperature is to be detected and an object 43 facing the object 41. The second surface B₂ of the second portion 12 may be in contact with the opposing object 43. The opposing object 43 is not particularly limited, and may be, for example, a metal plate or the like.

When the temperature sensor 30 is used, a load (pressing force) is applied to the temperature sensor 30 in a thickness direction thereof. According to the temperature sensor 30 of the present embodiment, since the second portion 12 where the sensor unit 10 is not formed has the maximum thickness d₂, when a load is applied in the thickness direction of the temperature sensor 30, the load is applied to the second portion 12, and is not directly applied to the sensor unit 10 formed in the first portion 11. In addition, when a load is applied to the second portion 12, stress can propagate to the first portion 11 adjacent to the second portion 12; however, since the first portion 11 is located at the end portion X of the flexible substrate 20 and is free, the stress can be effectively relaxed. As a result, generation of stress in the sensor unit 10 can be substantially eliminated, and excellent load bearing capability can be obtained. In addition, according to the temperature sensor 30 of the present embodiment, it is possible to prevent a decrease in temperature detection accuracy due to generation of stress in the sensor unit 10. Furthermore, according to the temperature sensor 30 of the present embodiment, the first surface A₂ of the second portion 12 forms a detection surface in contact with the object 41 whose temperature is to be detected, the first surface A₂ is pressed against the object 41 by a load (pressing force) and brought into close contact with the object 41, and the sensor unit 10 is formed in the first portion 11 adjacent to the second portion 12, so that the temperature of the object 41 can be detected by the sensor unit 10 with high accuracy. That is, according to the present embodiment, the temperature sensor 30 that is excellent in load bearing capability and can obtain high temperature detection accuracy is provided.

### (Embodiment 2)

The present embodiment relates to a modification example of the temperature sensor of Embodiment 1, and the same description as that in Embodiment 1 can be applied unless otherwise specified.

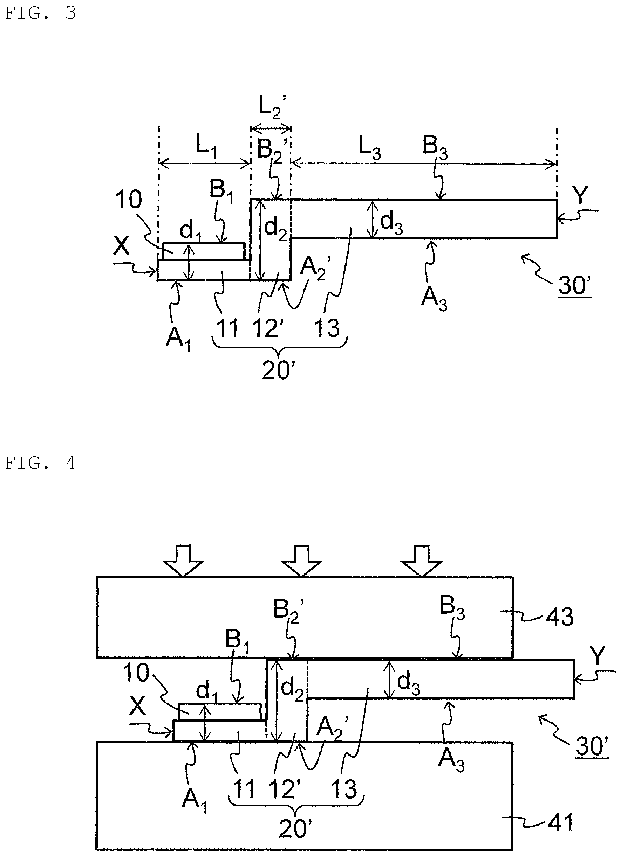

Referring to FIG. 3, in a temperature sensor 30' of the present embodiment, a flexible substrate 20' includes a first portion 11 which is located at one end portion X of the flexible substrate 20' and on which a sensor unit 10 is formed, a second portion 12' which is adjacent to the first portion 11 in a distal direction from the end portion X and has a maximum thickness d₂ between a first surface A₂' and a second surface B₂' facing each other, and a third portion 13 which is adjacent to the second portion 12' in the distal direction from the end portion X and has, between a third surface A₃ and a fourth surface B₃ facing each other, a thickness d₃ which is smaller than the maximum thickness d₂. The first portion 11, the second portion 12', and the third portion 13 may appropriately include two extended electrode portions extended from the two electrodes of the sensor unit 10, two wires electrically connected to these extended electrode portions, and the like.

In the temperature sensor 30' of the present embodiment, the fourth surface B₃ of the third portion 13 and the second surface B₂' of the second portion 12' are on the same plane. Thus, since the thickness d₃ of the third portion 13 is less than the maximum thickness d₂ of the second portion 12', the third surface A₃ of the third portion 13 is positioned at an inner position from the first surface A₂' of the second portion 12'. Such a flexible substrate 20' may be understood as having a generally S-shaped cross-sectional shape including the first portion 11, the second portion 12' and the third portion 13 as a whole.

In the temperature sensor 30' of the present embodiment, a length L₂' (in the present embodiment, a dimension between a boundary of the first portion 11 and the second portion 12' and a boundary of the second portion 12' and the third portion 13) of the second portion 12' can be appropriately selected within equal to or more than a dimension that provides a minimum area necessary for a detection surface to be described later and a dimension that can achieve higher temperature detection accuracy. On the other hand, a length L₃ (a dimension between the boundary between the second portion 12' and the third portion 13 and the other end portion Y of the flexible substrate 20') of the third portion 13 is not particularly limited, and may vary depending on the application of the temperature sensor 30' .

As illustrated in FIG. 4, the temperature sensor 30' of the present embodiment is used such that at least the first surface A₂' of the second portion 12' is in contact with an object 41 whose temperature is to be detected. In other words, at least the first surface A₂' of the second portion 12' forms a detection surface that comes into contact with the object 41 whose temperature is to be detected (more specifically, the detection surface is pressed against and brought into close contact with the object 41). Although the surface A₁ of the first portion 11 opposite to the sensor unit 10 can also come into contact with the object 41 whose temperature is to be detected (can form a detection surface), the surface A₁ does not necessarily have to come into contact with the object 41, and may "float" from the object 41, for example. Although the third surface A₃ of the third portion 13 is spaced apart from (not in contact with) the object 41 whose temperature is to be detected, for example, when the third portion 13 is curved, a part of the third surface A₃ may come into contact with the object 41 whose temperature is to be detected. In particular, as illustrated in FIG. 4, the temperature sensor 30' can be used in a state of being pressed between the object 41 whose temperature is to be detected and an object 43 facing the object 41. In addition to the second surface B₂' of the second portion 12', the fourth surface B₃ of the third portion 13 may also come into contact with the opposing object 43.

When the temperature sensor 30' is used, a load (pressing force) is applied to the temperature sensor 30' in a thickness direction thereof. According to the temperature sensor 30' of the present embodiment, since the first surface A₂' pressed against and brought into close contact with the object 41 whose temperature is to be detected by the load (pressing force) is smaller than the first surface A₂ in the temperature sensor 30 of Embodiment 1, the heat of the object 41 (heat source) is less likely to be conducted to the second surface B₂', the fourth surface B₃ (further the opposing object 43), and the like, and can be more efficiently conducted to the sensor 10, and the temperature of the object 41 can be detected with higher accuracy by the sensor unit 10. That is, according to the present embodiment, the temperature sensor 30' capable of obtaining higher temperature detection accuracy in addition to the same effects as those in Embodiment 1 is provided.

In order to achieve higher temperature detection accuracy, it is preferable that an area of the first surface A₂' is 3% or less with respect to an area of an object to be measured of the object 41 whose temperature is to be detected. By preventing the heat of the object 41 whose temperature is to be detected (heat source) from being conducted to the second surface B₂', the fourth surface B₃ (further, the opposing object 43), and the like, the temperature can be detected with accuracy within ± 0.5°C with respect to an actual temperature of the object 41.

In order to further improve the temperature detection accuracy, it is preferable to adjust heat insulating properties and heat dissipation properties of the temperature sensor 30' according to the object 41 whose temperature is to be detected (heat source). When the heat source of the object 41 whose temperature is to be detected is small, thermal conduction is suppressed as much as possible (heat insulating properties are secured), whereby a change in temperature of the object 41 whose temperature is to be detected due to insertion of the temperature sensor 30' between the object 41 and the opposing object 43 can be reduced, and the temperature detection accuracy can be further improved. When the heat source of the object 41 whose temperature is to be detected is large, the thermal conduction is increased (heat dissipation properties are secured), whereby the change in temperature of the object 41 whose temperature is to be detected due to insertion of the temperature sensor 30' between the object 41 and the opposing object 43 can be reduced, and the temperature detection accuracy can be further improved.

When the heat insulating properties are required, the third surface A₃ of the third portion 13 may be exposed as in the temperature sensor 30' illustrated in FIGS. 3 to 4. This can provide air (or other gas in some cases) heat insulation in a gap between the object 41 whose temperature is to be detected and the third surface A₃.

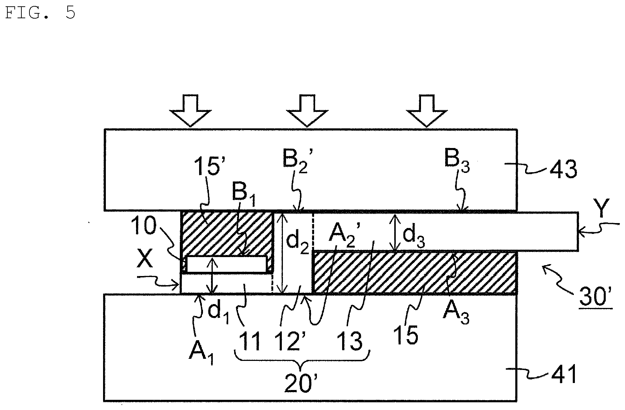

Alternatively, when heat insulating properties are required, as illustrated in FIG. 5, the third surface A₃ of the third portion 13 may be covered with a heat insulating material 15 that comes into contact with the object 41 whose temperature is to be detected.

Accordingly, the gap between the object 41 whose temperature is to be detected and the third surface A₃ can be filled with the heat insulating material 15 to provide heat insulation. When the influence on the sensor unit 10 is acceptable, the gap between the sensor unit 10 and the opposing object 43 may also be filled with a heat insulating material 15' to provide further heat insulation. The heat insulating material may be a material having a low thermal conductivity, and may be, for example, a material having a thermal conductivity of 1 W/(m·K) or less.

When the heat dissipation properties (cooling properties) are required, as illustrated in FIG. 5, the third surface A₃ of the third portion 13 may be covered with the heat dissipating material 15 that comes into contact with the object 41 whose temperature is to be detected. Accordingly, the gap between the object 41 whose temperature is to be detected and the third surface A₃ can be filled with the heat dissipating material 15 to provide heat dissipation. When the influence on the sensor unit 10 is acceptable, the gap between the sensor unit 10 and the opposing object 43 may also be filled with the heat dissipating material 15' to provide further heat insulation. The heat dissipating material may be a material having a high thermal conductivity, and may be, for example, a material having a thermal conductivity of 10 W/(m·K) or more.

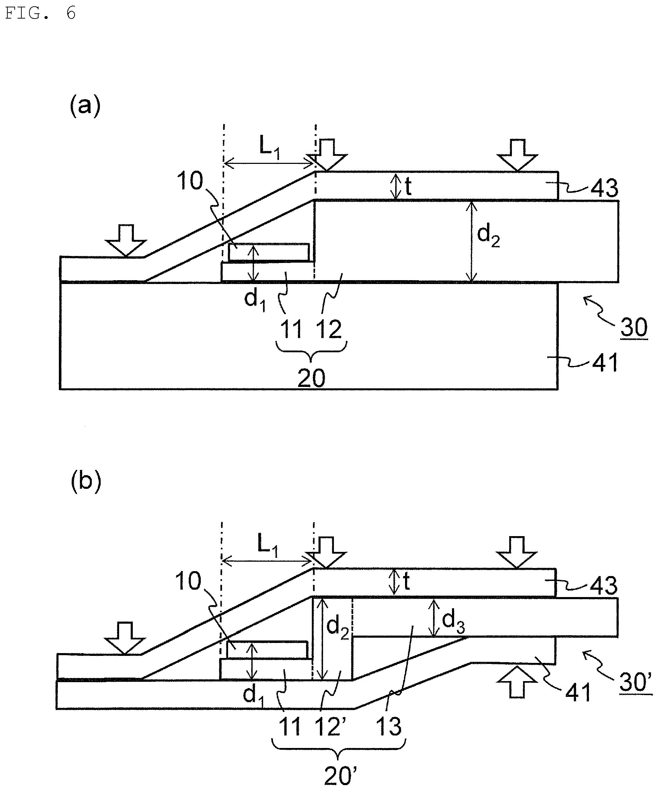

Alternatively, when the heat dissipation properties (cooling properties) are required, as illustrated in FIGS. 6 (a) to 6 (b), the load (pressing force) may be increased to deform the opposing object 43 and/or the object 41 whose temperature is to be detected, and the opposing object 43 (for example, a metal plate) may be brought into contact with the object 41 (FIG. 6 (a) illustrates a case of the temperature sensor 30 of Embodiment 1, and FIG. 6 (b) illustrates a case of the temperature sensor 30' of Embodiment 2). A contact area between the opposing object 43 and the object 41 whose temperature is to be detected may be appropriately adjusted. As a result, the heat of the object 41 whose temperature is to be detected can be released to the opposing object 43 to provide heat dissipation (cooling). In this case, by suitably selecting a thickness t of the opposing object 43, the maximum thickness d₂ of the second portion 12 or 12', and the length L₁ of the first portion 11, it is possible to prevent a load from being applied to the sensor unit 10 (for example, it is possible to prevent the opposing object 43 from being deformed and prevent a load from being directly applied to the sensor unit 10).

In either case, the change in temperature of the object 41 whose temperature is to be detected caused by inserting the temperature sensor 30' between the object 41 and the opposing object 43 can be suppressed to ± 0.5°C or less.

### (Embodiment 3)

The present embodiment relates to a specific example of the temperature sensor of Embodiment 2, and the same description as that in Embodiments 1 to 2 can be applied unless otherwise specified.

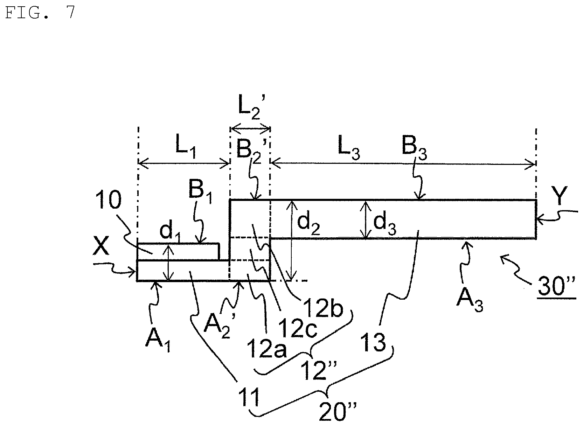

Referring to FIG. 7, in a flexible substrate 20" of a temperature sensor 30" of the present embodiment, a second portion 12" includes a first partial expansion portion 12a from a first portion 11, a third partial expansion portion 12b from a third portion 13, and a joint 12c joining the expansion portions 12a and 12b.

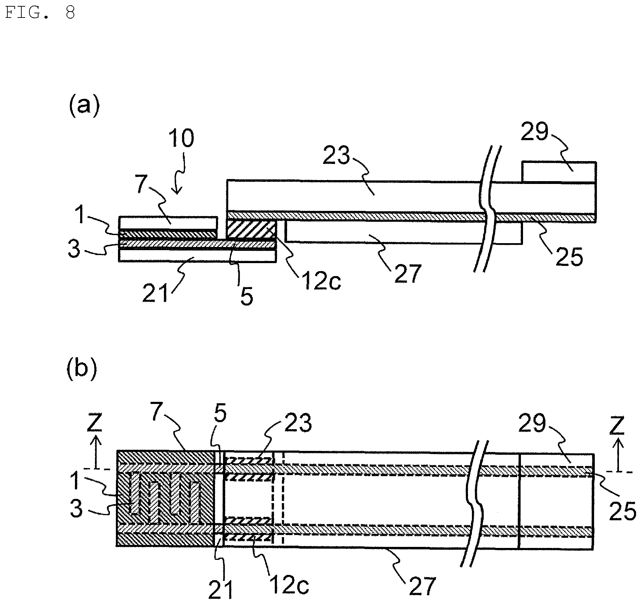

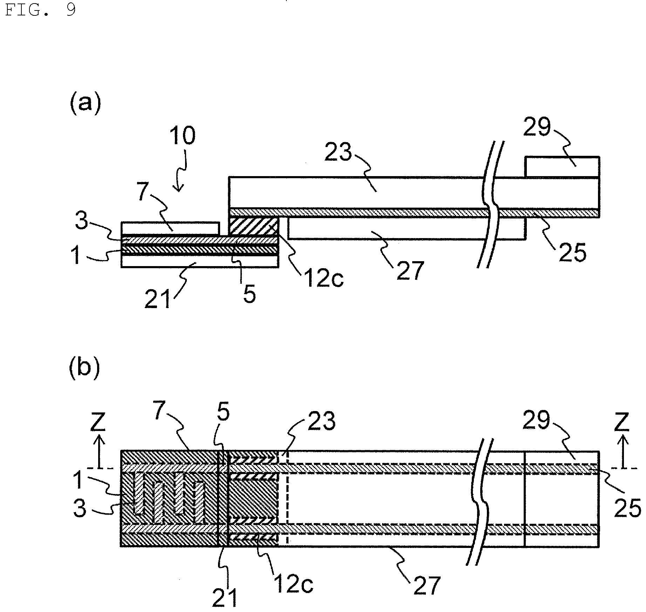

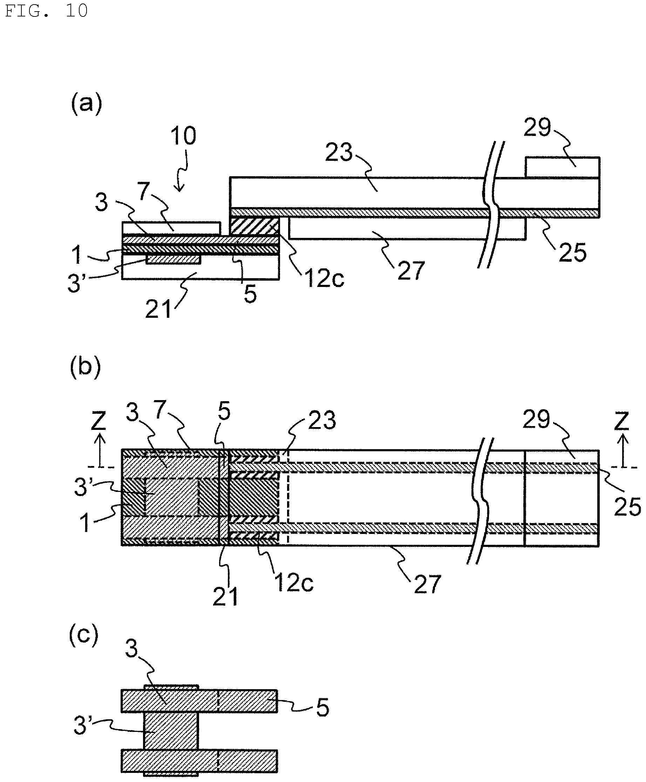

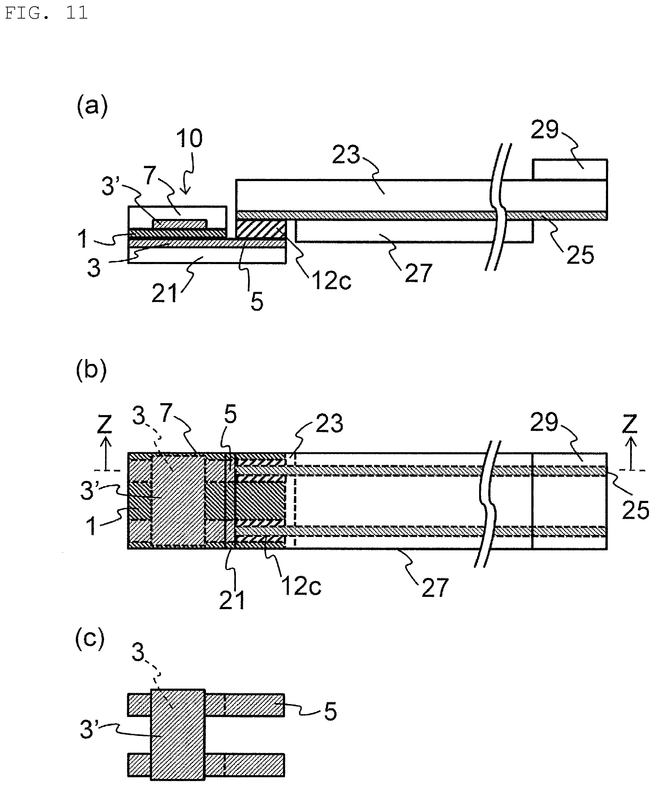

More specifically, referring to FIGS. 8 to 11, the sensor unit 10 includes a thermistor layer 1 and two electrodes 3 that are in contact with the thermistor layer 1 and are arranged to be spaced apart from each other, and may or may not further include a cover layer (or a protective film) 7. In FIGS. 8 and 9, the two electrodes 3 are a pair of comb-shaped electrodes formed in contact with the thermistor layer 1, and in FIGS. 10 and 11, the two electrodes 3 are a pair of divided electrodes arranged in contact with the thermistor layer 1 and facing a non-connection type internal electrode 3'. (In FIGS. 10 and 11, the electrode 3 is integrally formed with an extended electrode portion 5, and it is difficult to clearly define a boundary between the electrode 3 and the extended electrode portion 5; however, the electrode 3 may include a region facing the non-connection type internal electrode 3', and the boundary is indicated by a dotted line in FIGS. 10 (c) and 11 (d) for convenience. In FIGS. 8 to 11, reference numerals of the first portion 11, the second portion 12", the first partial expansion portion 12a, the third partial expansion portion 12b, the third portion 13, and the like are omitted; however, by contrast with FIG. 7, it can be grasped which part of FIGS. 8 to 11 the reference numerals of these omitted members refer to. It should be noted that in FIGS. 9 to 10, a portion of the thermistor layer 1 is present over the first partial expansion portion 12 of the second portion 12"; however, a portion of the thermistor layer 1 present in the first partial expansion portion 12 is not provided with the electrode 3, therefore does not function as a sensor, and is therefore not included in the sensor unit 10.

Referring to FIGS. 7 to 11, the first portion 11 and the first partial expansion portion 12a include a first substrate 21 and the two extended electrode portions 5 formed on the first substrate 21 and extended from the two electrodes 3 of the sensor unit 10. The third portion 13 and the third partial expansion portion 12b include a second substrate 23 and two wires 25 formed on the second substrate 23. The two extended electrode portions 5 and the two wires 25 are electrically connected to each other with the joint 12c interposed therebetween. In the first portion 11, the cover layer 7 covering the thermistor layer 1 and/or the electrode 3 may be provided. In the third portion 13, a cover layer 27 covering the wire 25 may be provided. Although not essential to the present embodiment, the cover layer 27 may be removed to expose the wire 25 at the end portion Y of the third portion 13 and in the vicinity thereof, and a reinforcing plate 29 may be provided on a surface of the second substrate 23 on the opposite side thereto to enable connection to a connection (not illustrated) such as a connector. In this case, the connection such as the connector and the joint 12c can be understood as a secondary connection and a primary connection, respectively.

Any suitable material and method can be used for the joint 12c as long as the two extended electrode portions 5 and the two wires 25 can be electrically connected to each other (preferably, as long as the extended electrode portions 5 and the wires 25 can be thinly joined and sufficiently electrically and strongly joined). Examples of the joint 12c include an anisotropic conductive film (ACF), a solder material, a conductive paste, sealing of a contact portion with a curable resin (a periphery of the extended electrode portion and the wire is covered with a curable resin in a state where the extended electrode portion and the wire are in contact with each other, and the resin is cured for sealing), and ultrasonic bonding.

According to the present embodiment, since the second portion 12" includes the extended electrode portion 5, the wire 25, and the joint 12c joining the extended electrode portion 5 and the wire 25 in a concentrated manner, relatively high rigidity is obtained, and the load bearing capability is further improved.

According to the temperature sensor 30" of the present embodiment, as illustrated in FIGS. 8 to 11, the temperature sensor 30' of Embodiment 2 can be easily embodied. The temperature sensor 30" of the present embodiment can be manufactured by forming the sensor unit 10 in the first portion 11 and the first partial expansion portion 12a, separately preparing the third portion and the third partial expansion portion 12c, and joining them at the joint 12c. Thus, the present embodiment provides the temperature sensor 30" which is excellent in load bearing capability, can obtain high temperature detection accuracy, and is suitable for mass production at low cost by a simple manufacturing method.

### (Embodiment 4)

The present embodiment relates to a temperature sensor array including a plurality of the temperature sensors of Embodiment 3, and the same description as that in Embodiments 1 to 3 can be applied unless otherwise specified.

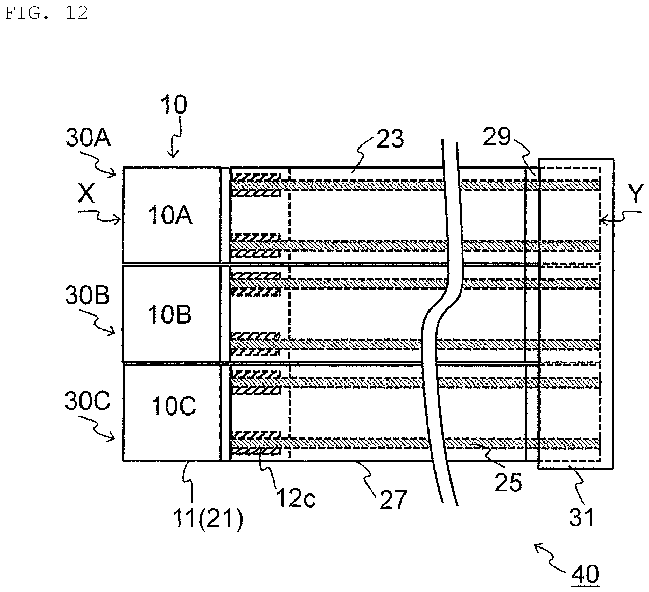

Referring to FIG. 12, a temperature sensor array 40 of the present embodiment includes a plurality of temperature sensors 30A to 30C, and the plurality of temperature sensors 30A to 30C are connected to a common connection 31 at or near an end portion Y opposite to a first portion 11 (located at an end portion X) of a flexible substrate. In this case, the common connection 31 and the joint 12c can be understood as a secondary connection and a primary connection, respectively. In the illustrated example, the end portions Y of the temperature sensors 30A to 30C are inserted into the common connection (for example, a connector) 31; however, the present invention is not limited thereto. The plurality of temperature sensors 30A to 30C are separated from each other, and the plurality of temperature sensors 30A to 30C may be manufactured by integrally and simultaneously preparing and then individually cutting, and the cutting may be performed either before or after connection of the plurality of temperature sensors 30A to C to the common connection 31.

In the illustrated aspect, the temperature sensor array 40 includes the three temperature sensors 30A to 30C as an example as the plurality of temperature sensors; however, the number of the plurality of temperature sensors is not particularly limited as long as it is two or more, and may be selected according to the application of the temperature sensor array 40. In the present embodiment, the temperature sensor array 40 includes the plurality of temperature sensors of Embodiment 3; however, any of the temperature sensors of Embodiments 1 to 3 may be used.

According to the temperature sensor array 40 of the present embodiment, each temperature can be detected by bringing the plurality of temperature sensors 30A to 30C into contact with different objects whose temperature is to be detected. According to the temperature sensor array 40 of the present embodiment, since the plurality of temperature sensors 30A to 30C are connected to the common connection 31, only by connecting the common connection 31 to an external device (not illustrated) such as a measurement circuit, the plurality of temperature sensors 30A to 30C can be connected to the external device at a time

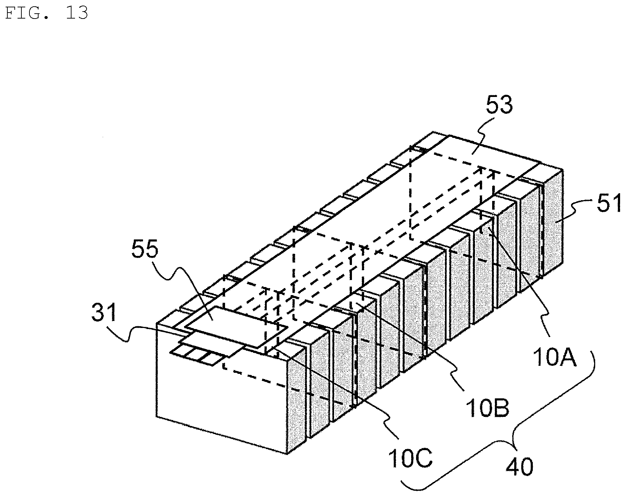

Although the temperature sensor array 40 of the present embodiment can be used for any suitable application, for example, as illustrated in FIG. 13, for a plurality of cells (batteries) 51 of a lithium ion battery module, the temperature sensor array 40 can be used by sandwiching the temperature sensors 30A to 30C one by one between the two cells 51 adjacent to each other, whereby the temperature of each of the cells 51 can be detected. In FIG. 13, a temperature sensor array circuit board 55 is incorporated in the battery module circuit board 53 placed on a stack of the plurality of cells 51, and the temperature sensor array 40 is connected to the temperature sensor array circuit board 55 via the common connection (for example, a connector) 31. More specifically, in the temperature sensor array 40, as illustrated in FIG. 12, the end portion Y is inserted into the connector 31, and in FIG. 13, the temperature sensor array 40 is once drawn out from the connector 31 to a front side toward a perspective view of FIG. 13, then bent, and arranged along a back surface side of the battery module circuit board 51; however, the present invention is not limited to the aspect illustrated in FIG. 13. In the lithium ion battery module 50, sensor units 10A to 10C of the temperature sensors 30A to 30C sandwiched between the two adjacent cells 51 can be in a state where a load is applied (state of being pressed) between the cells 51, and it is desirable that the temperature sensor exhibits high temperature detection accuracy while withstanding an assumed load (pressing force) in such a state. Each of the temperature sensors 30A to 30C of the temperature sensor array 40 of the present embodiment is excellent in load bearing capability and can obtain high temperature detection accuracy, and thus can be suitably used to detect the temperature of each cell in the lithium ion battery module.

### EXAMPLES

### (Comparative Example 1)

Comparative Example 1 relates to the temperature sensor having a uniform thickness as a whole including the sensor unit.

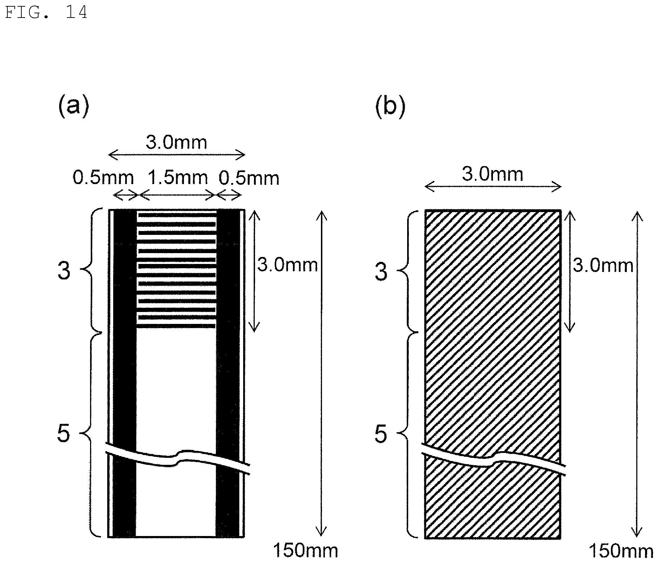

To metal oxide particles containing Mn and Ni at a ratio of 4 : 1 (atomic ratio) and having an average particle diameter of about 0.2 um, manganese acetylacetonate was added at a ratio of 10% by mass (based on a total mass of the metal oxide particles), and a raw material mixture was prepared using ethanol as a solvent and mixed for 16 hours. The raw material mixture in the form of slurry thus obtained was supplied in the form of a sheet having a thickness of 10 um on a copper foil having a thickness of 10 um by a doctor blade method. This sheet was dried at 100°C for 10 hours, and then heated at 250°C for 30 minutes under a pressure of 100 MPa using a heating press machine to obtain a precursor structure. The precursor structure was annealed at 250°C for 10 hours to remove unnecessary organic substances that may remain, and thus to obtain a structure. Thereafter, a precursor liquid of polyamide-imide was applied in a thickness of 10 um onto a film (metal oxide-containing composite layer capable of functioning as the thermistor layer) derived from the sheet in the obtained structure, and heated at 200°C for 1 hour to thermally cure the polyamide-imide, and thus to obtain a resin substrate. Thereafter, a resist was applied to the surface of the copper foil opposite to the resin substrate in a predetermined pattern, exposed and developed, a predetermined portion of the copper foil was removed by etching, and the remaining resist was removed to pattern-form two comb-shaped electrodes and an extended electrode portion extended from each of the comb-shaped electrodes. In the pattern of the copper foil, as schematically illustrated in FIG. 14 (a), an external dimension of a comb tooth portion of the comb-shaped electrode 3 as viewed from above was set to a width of 1.5 mm and a length of 3.0 mm, and a pattern portion of the comb-shaped electrode 3 and the extended electrode portion 5 were set to a width of 0.5 mm and a length of 150 mm on both outer sides in a width direction of the comb tooth portion, respectively (area of the sensor unit was 3.0 mm in width and 3.0 mm in length, and the extended electrode portion was sufficiently long, so that the extended electrode portion could be understood as a wire). The comb-shaped electrode of FIG. 14 (a) is a schematic example, and the details of the comb-shaped electrode (the dimension, the number, the pitch, and the like of each comb tooth of the comb-shaped electrode) can be different from those of FIG. 14 (a) (the same applies to the following Comparative Examples and Examples). On a laminate of the resin substrate (thickness: about 10 µm) and the metal oxide-containing composite layer (thermistor layer: thickness of about 10 µm) thus obtained, the laminate having a copper layer (comb-shaped electrode and extended electrode portion: thickness of about 10 µm) pattern-formed on an upper surface thereof, a polyimide tape (polyimide film having an adhesive layer: thickness of about 30 µm) was attached as a cover layer so as to cover the copper layer (in FIG. 14 (b), the cover layer is indicated by a hatched region). The structure thus obtained was cut with a dicing saw to prepare a temperature sensor having a width of about 3 mm, a length of about 150 mm, and a uniform thickness of 60 um over the whole as illustrated in FIGS. 14 (a) to (b).

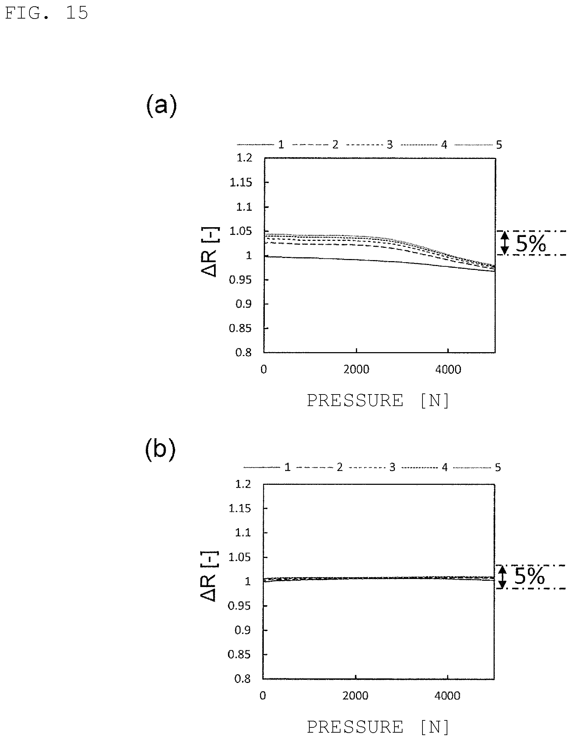

The prepared temperature sensor was subjected to a load test. More specifically, the temperature sensor was sandwiched between two iron plates having a diameter of 50 mm and a thickness of 25 mm, and pressure application at 0.5 tons (about 5000 N) was repeated five times to measure a resistance value change (ΔR (-)) at the same temperature. When pressure was applied, a pressure sensitive film (manufactured by Fujifilm Corporation, "Prescale" for medium pressures, detection sensitivity: 10 MPa, and the same applies hereinafter) was sandwiched between the comb-shaped electrode (corresponding to the sensor unit) of the temperature sensor and the iron plate, and the pressure was measured, so that it was confirmed that a load of 10 MPa or more was applied to the sensor unit. The results are shown in FIG. 15 (a). As illustrated in FIG. 15 (a), it was found that when a resistance change rate in the load test was 5% or more, error in temperature detection was larger than 5°C.

### (Comparative Example 2)

Comparative Example 2 relates to a temperature sensor in which both outer portions in the longitudinal direction excluding the sensor unit have a uniform thickness as a whole.

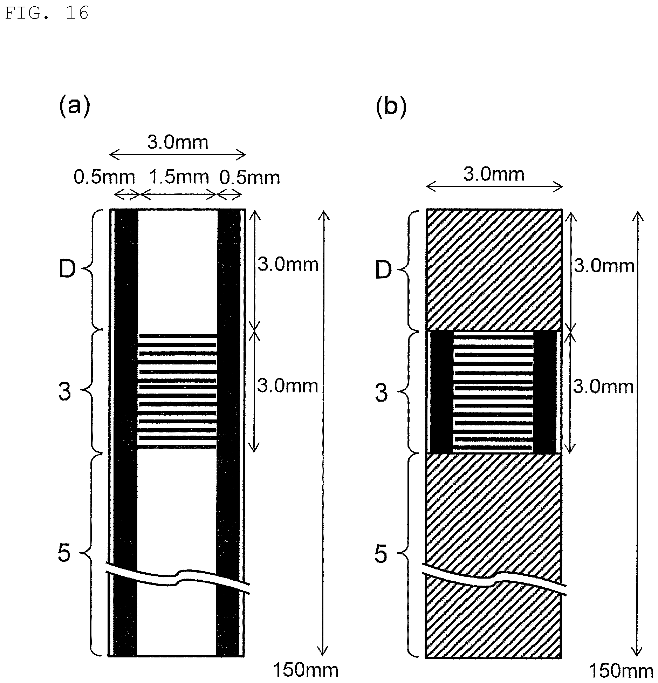

As shown in FIGS. 16 (a) to 16 (b), a temperature sensor (cover layer thickness: about 30 µm) was prepared in the same manner as in Comparative Example 1 except that a dummy portion D having a length of 3.0 mm and having no comb-shaped portion was provided adjacent to the comb-shaped electrode 3, and the sensor unit corresponding to the comb-shaped electrode 3 was not covered with the cover layer (in FIG. 16 (b), the cover layer was indicated by a hatched region). In this temperature sensor, the dummy portion D and the extended electrode portion 5 were covered with the cover layer except for the sensor unit corresponding to the comb-shaped electrode 3. A thickness from a back surface of the resin substrate to the highest exposed surface of the comb-shaped electrode 3 was 30 um, whereas a thickness from the back surface of the resin substrate to an outer surface of the cover layer was 60 µm.

The prepared temperature sensor was subjected to the same load test as in Comparative Example 1. When pressure was applied, the pressure sensitive film was sandwiched between the comb-shaped electrode (corresponding to the sensor unit) of the temperature sensor and the iron plate, and the pressure was measured, so that it was confirmed that a load of 10 MPa or more was applied to the sensor unit also in Comparative Example 2. As a result, it was found that the resistance change rate in the load test was 5% or more, satisfactory temperature detection accuracy was not obtained, and the sensor was unsuitable as a temperature sensor. Although this temperature sensor has a structure in which a load is not directly applied to the sensor unit, it is considered that the cover layer is deformed in a horizontal direction by the load, the stress in the horizontal direction is propagated to the thermistor layer, and as a result, a resistance change occurs. The reason why it was confirmed that a load of 10 MPa or more was applied to the sensor unit as described above was considered that stress was applied to the sensor unit in the horizontal direction, and the sensor unit was deformed, so that the load was measured in a vertical direction.

### (Example 1)

Example 1 relates to the temperature sensor of Embodiment 1 described above with reference to FIGS. 1 to 2.

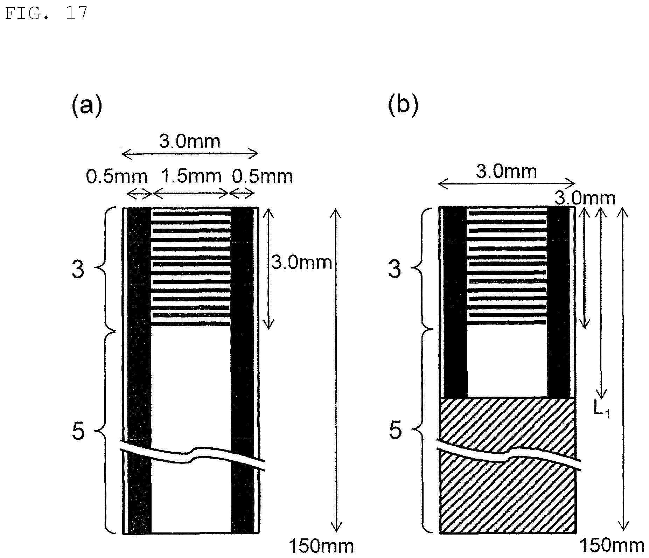

A temperature sensor (cover layer thickness: about 30 µm) was prepared in the same manner as in Comparative Example 1 except that the cover layer cut from an end portion where the comb-shaped electrode existed by the length L₁ was used, and the first portion having the length L₁ from the end portion was not covered with the cover layer (indicated by a hatched region in FIG. 17 (b)) as illustrated in FIGS. 17 (a) to 17 (b). In this temperature sensor, the length L₁ was 5.0 mm. The thickness from the back surface of the resin substrate to the highest exposed surface of the comb-shaped electrode (total thickness d₁ of the first portion and the sensor unit) was 30 um, whereas the thickness from the back surface of the resin substrate to the outer surface of the cover layer (maximum thickness d₂ of the second portion) was 60 um.

The prepared temperature sensor was subjected to the same load test as in Comparative Example 1. When pressure was applied, the pressure sensitive film was sandwiched between the comb-shaped electrode (corresponding to the sensor unit) of the temperature sensor and the iron plate, and the pressure was measured, so that it was confirmed that a load of 10 MPa or more was not applied to the sensor unit. The results are shown in FIG. 15 (b). As illustrated in FIG. 15 (b), it could be achieved that the resistance change rate in the load test was 1% or less, and the error in temperature detection was within 1°C.

### (Example 2)

Example 2 relates to the temperature sensor of Embodiment 1 described above with reference to FIGS. 1 to 2, and more particularly to a usage mode of FIG. 6 (a).

A temperature sensor was prepared in the same manner as in Example 1 except that the thickness of the resin substrate, a position where the cover layer was attached, and the thickness of the cover layer (stacking one or two or more sheets on the front surface side, optionally stacking one or two or more sheets on the entire back surface of the resin substrate, or the like) were variously changed. As a result, the total thickness d₁ of the first portion and the sensor unit, the maximum thickness d₂ of the second portion, and the length L₁ of the first portion were changed.

A metal plate (60 mm square SUS plate) having a thickness t was disposed as an opposing object (indicated by reference numeral 43 in FIG. 6 (a)) on the prepared temperature sensor, fluororubber having a thickness of 1 mm was further disposed on the outer side of the metal plate, a pressure of 0.5 tons was applied by sandwiching the metal plate and the fluororubber between upper and lower flat plates of a pressing machine, and the application of the load to the sensor unit accompanying the deformation of the metal plate as illustrated in FIG. 6 (a) was examined. Conditions were set in which the thickness t of the metal plate, the total thickness d₁ of the first portion and the sensor unit, the maximum thickness d₂ of the second portion, and the thickness ratio d₁/d₂ were different. Then, when pressure was applied, the pressure was measured by sandwiching the pressure-sensitive film so as to cover the entire surface between the temperature sensor and the metal plate, and the largest L₁ (hereinafter referred to as "L_{1MAX}") at which a load of 10 MPa or more was not applied to the sensor unit was examined under each condition. The results are shown in Table 1 and FIGS. 18 (a) to (c).

**[Table 1]**

| No. | t (mm) | d₁ (mm) | d₂ (mm) | d₂-d₁ (mm) | d₁/d₂ (-) | L_{1MAX} (mm) |
|---|---|---|---|---|---|---|
| 1 | 0.2 | 0.060 | 0.072 | 0.012 | 0.83 | 30.0 |
| 2 | 1.0 | 0.060 | 0.072 | 0.012 | 0.83 | 14.0 |
| 3 | 2.0 | 0.060 | 0.072 | 0.012 | 0.83 | 9.5 |
| 4 | 3.0 | 0.060 | 0.072 | 0.012 | 0.83 | 9.5 |
| 5 | 4.0 | 0.060 | 0.072 | 0.012 | 0.83 | 11.0 |
| 6 | 2.0 | 0.030 | 0.036 | 0.006 | 0.83 | 9.5 |
| 7 | 2.0 | 0.090 | 0.108 | 0.018 | 0.83 | 10.0 |
| 8 | 2.0 | 0.180 | 0.216 | 0.036 | 0.83 | 10.0 |
| 9 | 2.0 | 0.030 | 0.060 | 0.030 | 0.50 | 14.5 |
| 10 | 2.0 | 0.180 | 0.360 | 0.180 | 0.50 | 17.5 |
| 11 | 2.0 | 0.120 | 0.240 | 0.120 | 0.50 | 16.0 |
| 12 | 2.0 | 0.060 | 0.120 | 0.060 | 0.50 | 14.5 |
| 13 | 1.0 | 0.060 | 0.120 | 0.060 | 0.50 | 30.0 |
| 14 | 3.0 | 0.060 | 0.120 | 0.060 | 0.50 | 15.0 |
| 15 | 4.0 | 0.060 | 0.120 | 0.060 | 0.50 | 17.5 |
| 16 | 2.0 | 0.060 | 0.065 | 0.005 | 0.92 | 4.5 |
| 17 | 2.0 | 0.060 | 0.080 | 0.020 | 0.75 | 10.0 |
| 18 | 2.0 | 0.060 | 0.084 | 0.024 | 0.71 | 10.5 |
| 19 | 2.0 | 0.060 | 0.092 | 0.032 | 0.65 | 12.0 |
| 20 | 2.0 | 0.060 | 0.099 | 0.039 | 0.61 | 12.5 |
| 21 | 2.0 | 0.060 | 0.108 | 0.048 | 0.56 | 14.0 |

FIG. 18 (a) is a graph illustrating a relationship between L_{1MAX} and t when d₁ = 0.06 mm and d₁/d₂ = 0.5 or 0.83. As understood from FIG. 18 (a), at d₁ = 0.06 mm, L_{1MAX} showed a minimum value at t = 2.0 mm in both cases where d₁/d₂ = 0.5 and 0.83 (that is, regardless of d₁/d₂). This is understood as follows. For example, as illustrated in FIG. 2, when it is assumed that a metal plate having a sufficiently large thickness t is used as the opposing object (indicated by reference numeral 43 in FIG. 2), the metal plate is not substantially deformed when pressure is applied to the metal plate, all the pressure is applied to the second portion (portion having the thickness d₂), irrespective of the extent to which L₁ is increased, a load of 10 MPa or more is not applied to the sensor unit, and L_{1MAX} is theoretically understood to be infinite. As the thickness t of the metal plate decreases, the metal plate is easily deformed, and shifts from a state schematically illustrated in FIG. 2 to a state schematically illustrated in FIG. 6 (a). A degree of deformation of the metal plate can also depend on the pressure (load) and material characteristics of metal in addition to the thickness t of the metal plate, but is not greatly affected by these in the conditions of Example 2 (and use applications assumed in Example 2 to be described later), and thus it is sufficient to consider only the influence by the thickness t. It is easily understood that a deformation amount of the metal plate gradually increases as the thickness t of the metal plate decreases, L_{1MAX} appears when the load applied to the sensor unit becomes 10 MPa or more, and the value of L_{1MAX} gradually decreases as the load applied to the sensor unit increases. When the thickness t of the metal plate further decreases and the deformation amount of the metal plate further increases, a contact area between the metal plate on the upper side of the temperature sensor and an object (being the lower flat plate of the pressing machine in Example 2, and corresponding to the object whose temperature is to be detected indicated by reference numeral 41 in FIG. 6 (a)) on the lower side of the temperature sensor increases, so that the load from the metal plate is applied not only to the second portion and the sensor unit but also to the lower object, and the load on the second portion and the sensor unit relatively decreases. Thus, when the thickness t of the metal plate further decreases, the load applied to the sensor unit turns from an increase to a decrease, and the value of L_{1MAX} turns from a decrease to an increase. As a result, the value of L_{1MAX} indicates the minimum value in the relationship with the thickness t of the metal plate, and in Example 2, as illustrated in FIG. 18 (a), L_{1MAX} is understood to indicate the minimum value at t = 2.0 mm.

FIG. 18 (b) is a graph illustrating a relationship between L_{1MAX} and d₁/d₂ when t = 2.0 mm and d₁ = 0.06 mm. As illustrated in FIG. 18 (b), in the case of d₁ = 0.06 mm, at t = 2.0 mm where L_{1MAX} indicated the minimum value, L_{1MAX} linearly decreased as d₁/d₂ increased (in data of d₁/d₂ = 0.50 to 0.83), and rapidly decreased when d₁/d₂ exceeded 0.83 (in data of d₁/d₂ = 0.92). When d₁/d₂ = 0.83, L_{1MAX} was 9.5 (No. 3 in Table 1). When a linear approximation formula was obtained from the data of d₁/d₂ = 0.50 to 0.83, L_{1MAX} (mm) = -15 × d₁/d₂ + 22 was obtained (in FIG. 18 (b), an approximate straight line was indicated by a dotted line, and a linear approximate formula in which d₁/d₂ (-) and L_{1MAX} (mm) were x and y, respectively, was indicated together). As described above, L_{1MAX} (mm) is the largest L₁ at which a load of 10 MPa or more is not applied to the sensor unit, and FIG. 18 (b) is data at t = 2.0 mm at which L_{1MAX} indicates the minimum value. Thus, from the result of FIG. 18 (b), it is understood that it is ensured that a load of 10 MPa or more is not applied to the sensor unit as long as d₁/d₂ ≤ 0.83 and L₁ (mm) ≤ -15 × d₁/d₂ + 22 are satisfied. More reliably, it is understood that a load of 10 MPa or more is not applied to the sensor unit within a range satisfying d₁/d₂ ≤ 0.83 and L₁ ≤ 9.5 mm. Since L_{1MAX} rapidly decreases when d₁/d₂ > 0.83, it is considered that the influence of a magnitude of the applied pressure (load), a measurement environment, and the like can be received.

FIG. 18 (c) is a graph illustrating a relationship between L_{1MAX} and d₁ when t = 2.0 mm and d₁/d₂ = 0.5 or 0.83. In FIG. 18 (c), at t = 2.0 mm where L_{1MAX} indicated the minimum value, L_{1MAX} was substantially constant (substantially flat) regardless of d₁ when d₁/d₂ was constant (0.5 or 0.83 in the illustrated example). Thus, it has been confirmed that the matter to be understood from FIGS. 18 (a) and 18 (b) can be considered to be similarly applied not only when d₁ = 0.06 mm but also when d₁ is another value.

Although the results in Table 1 are obtained by deforming the metal plate disposed as the opposing object on the temperature sensor, the same results were also obtained when the same metal plate was disposed above and below the temperature sensor and the temperature sensor was sandwiched between the metal plates. Thus, for example, when the temperature sensor in which the sensor unit is provided in the first portion of L₁ ≤ 9.5 mm is used while being sandwiched between metal plates such as between adjacent cells in the battery module, it is understood that d₁/d₂ is preferably 0.83 or less.

In Example 2, assuming the case where the temperature sensor was used by being sandwiched between adjacent cells in the battery module, an 60 mm square SUS plate which was considered to be minimum in such use application was used, a pressure of 0.5 tons (it was preferable to assume an actual load instead of a pressure per area) which was considered to be maximum in such use application was applied, and the above result was obtained under the condition that the load applied to the sensor unit was 10 MPa or less with the width of the sensor unit typically set to 3.0 mm (see FIG. 17). However, when the metal plate (SUS plate) is smaller than 60 mm square, the applied pressure is larger than 0.5 tons, the width of the sensor unit is smaller than 3 mm, and/or the upper limit of the load applied to the sensor unit is smaller than 10 MPa, the value of L_{1MAX} satisfying d₁/d₂ = 0.83 (in other words, a preferable upper limit value of L₁ when d₁/d₂ ≤ 0.83) can be smaller than 9.5 mm, and can be obtained by the same test as Example 2.

### (Example 3)

Example 3 relates to the temperature sensor of Embodiment 3 described above with reference to FIG. 7, and more particularly to the temperature sensor of the specific example illustrated in FIG. 8.

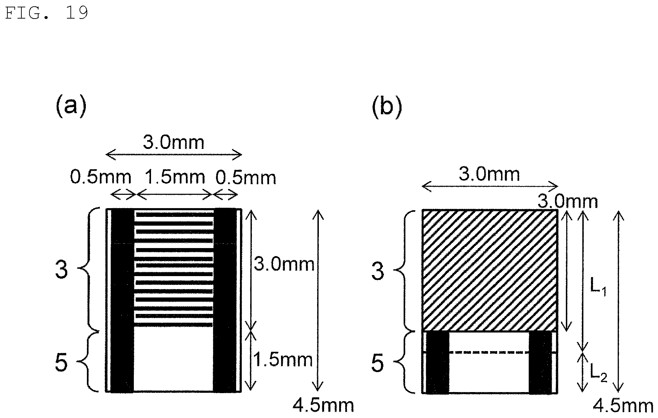

A flexible printed circuit board (FPC) was prepared in which a copper foil having a thickness of 10 um was formed in a predetermined pattern on a polyimide substrate having a thickness of 10 um. In the pattern of the copper foil, as schematically illustrated in FIG. 19 (a), the external dimension of the comb tooth portion of the comb-shaped electrode 3 as viewed from above was set to a width of 1.5 mm and a length of 3.0 mm, and the pattern portion of the comb-shaped electrode 3 and the extended electrode portion 5 were formed with a width of 0.5 mm and a length of 4.5 mm on both outer sides in the width direction of the comb tooth portion, respectively (area of the sensor unit was 3.0 mm in width and 3.0 mm in length). A thermistor layer was formed on the FPC in such a thickness that a height from an upper surface of the comb-shaped electrode 3 was 10 um in the same manner as in the method of forming the metal oxide-containing composite layer described above in Comparative Example 1 so as to embed and cover the comb-shaped electrode 3. The external dimensions of the thermistor layer as viewed from the top surface were about 3.0 mm in width and about 3.0 mm in length. A polyimide tape (polyimide film having an adhesive layer: thickness of about 30 µm) was attached as a cover layer to the entire upper surface of the thermistor layer. As a result, as schematically illustrated in FIGS. 19 (a) to 19 (b), a thermistor element was prepared in which the sensor unit was covered with the cover layer (indicated by a hatched region in FIG. 19 (b)), and the extended electrode portion 5 was exposed.

On the other hand, a flexible flat cable (FFC) having a total thickness of 135 um was prepared, in which two copper wires having a thickness of 10 um were formed at a pitch of 2 mm on a polyimide substrate having a thickness of 100 um, and a cover layer of a polyimide film was formed so as to cover the copper wires. At one end portion of the FFC, the cover layer was not provided with a length of 3 mm from the end portion, and two wires were exposed.

Then, an anisotropic conductive film (ACF) having a width of 3 mm and a length of 1 mm was disposed and superposed between a wiring exposed region of the FFC and a region not covered with the cover layer of the thermistor element prepared as described above (in a region having a length L₂ illustrated in FIG. 19 (b)), and joined at 180°C while a load of 2 MPa was applied. As a result, the two extended electrode portions 5 of the thermistor element and the two wires of the FFC were electrically connected to each other to prepare a temperature sensor. In the temperature sensor, a thickness of a portion between the extended electrode portion 5 and the wire in the joint derived from the ACF was 10 um. Further, in this temperature sensor, a thickness (the total thickness d₁ of the first portion and the sensor unit) from a back surface of the polyimide substrate of the thermistor element to the outer surface of the cover layer of the thermistor element was 60 um, whereas a thickness (the maximum thickness d₂ of the second portion) from the back surface of the polyimide substrate of the thermistor element to an outer surface of the polyimide substrate of the FFC including the joint was 140 um. Furthermore, in this temperature sensor, the length L₁ of the first portion was 3.5 mm, the length L₂ of the second portion was 1.0 mm, and the area of the joint (area of a first surface A' of the second portion in contact with the object whose temperature was to be detected) was 3 mm².

The prepared temperature sensor was subjected to the same load test as in Comparative Example 1. In the result of Example 3, similarly to the result of Example 1 illustrated in FIG. 15 (b), it could be achieved that the resistance change rate in the load test was 1% or less, and the error in temperature detection was within 1°C.

The back surface of the polyimide substrate of the thermistor element of the temperature sensor was attached to a heater surface of 10 mm square set at 50°C (actual temperature Tₕ of the heater), and a surface of the polyimide substrate of the FFC of the temperature sensor was brought into contact with an aluminum plate of 10 mm square and 10 mm thick to acquire a measurement value of the temperature sensor as the temperature of the heater surface (measurement temperature Tₘ₁). A temperature difference of Tₘ₁-Tₕ at the lapse of 1 hour was within 0.5°C. The area (heating area in this example) of the object to be measured of the heater as the object whose temperature was to be detected was 100 mm², whereas the area of the first surface A' of the second portion of the temperature sensor in contact with the object whose temperature was to be detected was 3 mm². Thus, it was shown that by setting the area of the first surface A₂' to 3% or less of the area of the object to be measured of the object whose temperature was to be detected, high temperature detection accuracy could be obtained.

The back surface of the polyimide substrate of the thermistor element of the temperature sensor was attached to the heater surface of 60 mm square set at 50°C, the surface of the polyimide substrate of the FFC of the temperature sensor was brought into contact with an aluminum plate of 60 mm square and 1 mm in thickness, fluororubber of 1 mm in thickness was further disposed outside the aluminum plate, and a pressure of 0.5 tons was applied by sandwiching the aluminum plate and the fluororubber by a pressing machine (as illustrated in FIG. 6 (b), the aluminum plate was deformed and brought into contact with the heater surface) to acquire a measurement value of the temperature sensor as the temperature of the heater surface (measurement temperature Tₘ₁) and measure a temperature of a surface of the aluminum plate with another temperature measuring instrument (measurement temperature Tₘ₂). As a case where the temperature sensor was not used, an aluminum plate of 60 mm square and 1 mm in thickness was brought into contact with the heater surface of 60 mm square set at 50°C, a fluororubber of 1 mm in thickness was further disposed outside the aluminum plate, the aluminum plate and the fluororubber were sandwiched by a press machine, a pressure of 0.5 tons was applied, and the temperature of the surface of the aluminum plate was measured by another temperature measuring instrument (measurement temperature Tₘ₀) (it should be noted that it is generally assumed that Tₘ₀ ≥ Tₘ₂ ≥ Tₘ₁ when considering loss of thermal resistance). As a result, temperature differences Tₘ₀ - Tₘ₂, Tₘ₀ - Tₘ₁, and Tₘ₂ - Tₘ₁ were all within 0.5°C. Thus, it was shown that high temperature detection accuracy could be obtained when the heat dissipation properties were required.

In the method of preparing a temperature sensor described above, in the preparation of the thermistor element, a total of four temperature sensors were further prepared similarly except that the following modifications (a) to (d) were made without attaching a polyimide tape as a cover layer to the entire upper surface of the thermistor layer.
(a) The back surface of the polyimide substrate (thickness: 10 um) of the thermistor element was left as it was (thus, d₁ = 30 µm and d₂ = 140 um) .
(b) A polyimide tape (polyimide film having an adhesive layer) having a thickness of 30 um was attached to the entire back surface of the polyimide substrate (thickness: 10 um) of the thermistor element (thus, d₁ = 60 µm and d₂ = 170 µm).
(c) A polyimide tape (polyimide film having an adhesive layer) having a thickness of 60 um was attached to the entire back surface of the polyimide substrate (thickness: 10 um) of the thermistor element (thus, d₁ = 90 µm and d₂ = 200 µm).
(d) A polyimide tape (polyimide film having an adhesive layer) having a thickness of 90 um was attached to the entire back surface of the polyimide substrate (thickness: 10 um) of the thermistor element (thus, d₁ = 120 µm and d₂ = 230 µm).

Each of these four temperature sensors was evaluated in the same manner as described above. That is, in the temperature sensor, the back surface of the polyimide substrate of the thermistor element was attached to the heater surface of 60 mm square set at 50°C, the surface of the polyimide substrate of the FFC of the temperature sensor was brought into contact with an aluminum plate of 60 mm square and 1 mm in thickness, fluororubber of 1 mm in thickness was further disposed outside the aluminum plate, and a pressure of 0.5 tons was applied by sandwiching the aluminum plate and the fluororubber by a pressing machine (as illustrated in FIG. 6 (b), the aluminum plate was deformed and brought into contact with the heater surface) to acquire a measurement value of the temperature sensor as the temperature of the heater surface (measurement temperature Tₘ₁) and measure the temperature of the surface of the aluminum plate with another temperature measuring instrument (measurement temperature Tₘ₂). As a result, in all of these four temperature sensors, the temperature differences Tₘ₀ - Tₘ₂, Tₘ₀ - Tₘ₁, and Tₘ₂ - Tₘ₁ were all within 0.5°C. Thus, it has been found that, when the maximum thickness d₂ is 230 um or less, particularly 200 um or less, the thickness of the polyimide substrate (the thickness of the first portion (and the first partial expansion portion)) existing between the sensor unit and the object whose temperature is to be detected does not substantially affect the temperature detection accuracy.

It is considered that the effect shown in Example 3 can be similarly obtained in a case where the arrangement of the thermistor layer and the electrode is changed as in Example 1 in the structure of the sensor unit, or in a case where a divided electrode or a planar electrode is applied instead of the comb-shaped electrode.

### (Example 4)

Example 4 relates to the temperature sensor array of Embodiment 4 described above with reference to FIG. 12.

Three thermistor elements were prepared in the same manner as in Example 3. On the other hand, a flexible flat cable (FFC) having a total thickness of 135 um was prepared, in which six copper wires having a thickness of 10 um were formed at alternating pitches of 2 mm and 1 mm on a polyimide substrate, and a cover layer of a polyimide film was formed so as to cover the copper wires. At both ends of the FFC, the cover layer was not provided with a length of 3 mm from the end portion, and six wires were exposed. In the other end portion of the FFC, a reinforcing plate was provided on the surface of the polyimide substrate opposite to the wiring exposed region

Then, an anisotropic conductive film (ACF) having a width of 9 mm and a length of 1 mm was disposed and superposed between the wiring exposed region of the FFC (one end portion without the reinforcing plate) and a region not covered with the cover layer of the three thermistor elements prepared as described above, and joined at 180°C while a load of 2 MPa was applied. As a result, the two extended electrode portions 5 of each of the three thermistor elements and the six wires of the FFC were electrically connected to each other. The structure thus obtained was divided into three portions, leaving the other end side portion where the reinforcing plate existed, such that the six wires of the FFC were two by two. Thereafter, the other end side portion where the reinforcing plate existed was inserted into and connected to a commercially available 9-pin connector with a pitch of 1 mm. As a result, a temperature sensor array as schematically illustrated in FIG. 12 was prepared.

In the prepared temperature sensor array, the connector can be connected to a measurement circuit board, and high temperature detection accuracy was obtained in all of the three sensor units as in Example 3.

In addition, the above description of Example 3 can also be applied to the temperature sensor array of Example 4.

### INDUSTRIAL APPLICABILITY

The temperature sensor and the temperature sensor array of the present invention can be configured to be flexible and thin as a whole, and can be used in various applications for detecting a temperature of an object whose temperature is to be detected. For example, the present invention can be suitably used when the temperature of the object whose temperature is to be detected is detected in a state where the temperature sensor is brought into contact with and pressed against the object whose temperature is to be detected (in particular, a state where the temperature sensor is pressed between the object whose temperature is to be detected and an object facing the object whose temperature is to be detected).

This application claims priority based on Japanese Patent Application No. 2020-64343 filed in Japan on Mar. 31, 2020.

### DESCRIPTION OF REFERENCE SYMBOLS

1: Thermistor layer
3, 3': Electrode
5: Extended electrode portion
7: Cover layer
10: Sensor unit
11: First portion
12, 12': Second portion
12a: First partial expansion portion
12b: Third partial expansion portion
12c: Joint
13: Third portion
15, 15': Heat insulating material or heat dissipating material
20, 20', 20": Flexible substrate
21: First substrate
23: Second substrate
25: Wire
27: Cover layer
29: Reinforcing plate
30, 30', 30", 30A, 30B, 30C: Temperature sensor
31: Common connection
40: Temperature sensor array
41: Object whose temperature is to be detected
43: Opposing object
50: Lithium ion battery module
51: Cell
53: Battery module circuit substrate
55: Temperature sensor array circuit board
A₁: Surface opposite to sensor unit
B₁: Exposed surface of sensor unit
A₂, A₂': 'First surface
B₂, B₂': Second surface
A₃: Third surface
B₃: Fourth surface
d₁, d₂, d₃: Thickness
X, Y: End portion

## Claims

1. A temperature sensor (30) comprising a sensor unit (10) formed on a flexible substrate (20), wherein the flexible substrate (20) includes a first portion (11) which is located at an end portion (X) of the flexible substrate (20) and in which the sensor unit (10) is formed, and a second portion (12) adjacent to the first portion (11) in a distal direction from the end portion (X) and having a maximum thickness (d₂) between a first surface (A₂) and a second surface (B₂) facing each other, a surface (A₁) of the first portion (11) opposite to the sensor unit (10) and the first surface (A₂) of the second portion (12) being on the same plane, at least the first surface (A₂) of the second portion (12) forming a detection surface in contact with an object whose temperature is to be detected, and a total thickness (d₁) of the first portion (11) and the sensor unit (10) being smaller than the maximum thickness (d₂) of the second portion (12) .

2. The temperature sensor (30) according to claim 1, wherein a ratio of the total thickness (d₁) of the first portion (11) and the sensor unit (10) to the maximum thickness (d₂) of the second portion (12) is 0.83 or less, and a length (L₁) of the first portion (11) is 9.5 mm or less.

3. The temperature sensor (30) according to claim 1 or 2, wherein the flexible substrate (20) further includes a third portion (13) adjacent to the second portion (12) in the distal direction from the end portion (X) and having a thickness (d₃) smaller than the maximum thickness (d₂) between a third surface (A₃) and a fourth surface (B₃) facing each other, and the fourth surface (B₃) of the third portion (13) and the second surface (B₂) of the second portion (12) are on the same plane.

4. The temperature sensor (30) according to claim 3, wherein the third surface (A₃) of the third portion (13) is exposed.

5. The temperature sensor (30) according to claim 3, wherein the third surface (A₃) of the third portion (13) is covered with a heat insulating material (15) or a heat dissipating material (15) that is in contact with the object whose temperature is to be detected.

6. The temperature sensor (30) according to any one of claims 3 to 5, wherein the second portion (12) includes an expansion portion (12a) from the first portion (11), an expansion portion (12b) from the third portion (13), and a joint (12c) that joins these expansion portions (12a, 12b).

7. The temperature sensor (30) according to claim 6, wherein the first portion (11) and the expansion portion (12a) from the first portion (11) include a first substrate (21) and two electrode portions (5) formed on the first substrate (21) and extended from the sensor unit (10), the third portion (13) and the expansion portion (12b) from the third portion (13) include a second substrate (23) and two wires (25) formed on the second substrate (23), and the two electrode portions (5) and the two wires (25) are electrically connected to each other with the joint (12c) interposed therebetween.

8. The temperature sensor (30) according to any one of claims 1 to 7, wherein the sensor unit (10) includes a thermistor layer (1), two electrodes (3) that are in contact with the thermistor layer (1) and are spaced apart from each other, and a cover layer (7), if present.

9. A temperature sensor array (40) comprising a plurality of the temperature sensors (30) according to any one of claims 1 to 8, the plurality of temperature sensors (30) being connected to a common connection (31) at or near an end portion (Y) of the flexible substrate (20) opposite to the first portion (11) .

## Patentansprüche

1. Temperatursensor (30), umfassend eine Sensoreinheit (10), die auf einem flexiblen Substrat (20) ausgebildet ist, wobei das flexible Substrat (20) einen ersten Abschnitt (11) beinhaltet, der sich an einem Endabschnitt (x) des flexiblen Substrats (20) befindet und in dem die Sensoreinheit (10) ausgebildet ist, und einen zweiten Abschnitt (12) beinhaltet, der benachbart zu dem ersten Abschnitt (11) in einer distalen Richtung von dem Endabschnitt (x) liegt und eine maximale Dicke (d₂) zwischen einer ersten Oberfläche (A₂) und einer zweiten Oberfläche (B₂) aufweist, die einander gegenüberliegen, eine Oberfläche (A₁) des ersten Abschnitts (11) gegenüber der Sensoreinheit (10) und die erste Oberfläche (A₂) des zweiten Abschnitts (12) in derselben Ebene liegen, wobei zumindest die erste Oberfläche (A₂) des zweiten Abschnitts (12) eine Erkennungsoberfläche in Kontakt mit einem Objekt bildet, dessen Temperatur erkannt werden soll, und eine Gesamtdicke (d₁) des ersten Abschnitts (11) und der Sensoreinheit (10) kleiner als die maximale Dicke (d₂) des zweiten Abschnitts (12) ist.

2. Temperatursensor (30) nach Anspruch 1, wobei ein Verhältnis der Gesamtdicke (d₁) des ersten Abschnitts (11) und der Sensoreinheit (10) zu der maximalen Dicke (d₂) des zweiten Abschnitts (12) 0,83 oder weniger beträgt und eine Länge (L₁) des ersten Abschnitts (11) 9,5 mm oder weniger beträgt.

3. Temperatursensor (30) nach Anspruch 1 oder 2, wobei das flexible Substrat (20) ferner einen dritten Abschnitt (13) beinhaltet, der benachbart zu dem zweiten Abschnitt (12) in distaler Richtung von dem Endabschnitt (x) liegt und eine Dicke (d₃) aufweist, die kleiner als die maximale Dicke (d₂) zwischen einer dritten Oberfläche (A₃) und einer vierten Oberfläche (B₃) ist, die einander zugewandt sind, und wobei die vierte Oberfläche (B₃) des dritten Abschnitts (13) und die zweite Oberfläche (B₂) des zweiten Abschnitts (12) in derselben Ebene liegen.

4. Temperatursensor (30) nach Anspruch 3, wobei die dritte Oberfläche (A₃) des dritten Abschnitt (13) freiliegt.

5. Temperatursensor (30) nach Anspruch 3, wobei die dritte Oberfläche (A₃) des dritten Abschnitts (13) mit einem wärmeisolierenden Material (15) oder einem wärmeableitenden Material (15) bedeckt ist, das mit dem Objekt, dessen Temperatur erkannt werden soll, in Kontakt steht.

6. Temperatursensor (30) nach einem der Ansprüche 3 bis 5, wobei der zweite Abschnitt (12) einen Ausdehnungsabschnitt (12a) aus dem ersten Abschnitt (11), einen Ausdehnungsabschnitt (12b) aus dem dritten Abschnitt (13) und ein Verbindungsstück (12c) beinhaltet, das diese Ausdehnungsabschnitte (12a, 12b) miteinander verbindet.

7. Temperatursensor (30) nach Anspruch 6, wobei der erste Abschnitt (11) und der Ausdehnungsabschnitt (12a) des ersten Abschnitts (11) ein erstes Substrat (21) und zwei Elektrodenabschnitte (5) beinhalten, die auf dem ersten Substrat (21) ausgebildet sind und sich von der Sensoreinheit (10) aus erstrecken, der dritte Abschnitt (13) und der Ausdehnungsabschnitt (12b) von dem dritten Abschnitt (13) ein zweites Substrat (23) und zwei Drähte (25) beinhalten, die auf dem zweiten Substrat (23) ausgebildet sind, und die zwei Elektrodenabschnitte (5) und die zwei Drähte (25) elektrisch miteinander verbunden sind, wobei das Verbindungsstück (12c) dazwischen geschaltet ist.

8. Temperatursensor (30) nach einem der Ansprüche 1 bis 7, wobei die Sensoreinheit (10) eine Thermistorschicht (1), zwei Elektroden (3), die in Kontakt mit der Thermistorschicht (1) stehen und voneinander beabstandet sind, und eine Deckschicht (7), falls vorhanden, beinhaltet.

9. Temperatursensoranordnung (40), umfassend eine Vielzahl von Temperatursensoren (30) nach einem der Ansprüche 1 bis 8, wobei die Vielzahl von Temperatursensoren (30) mit einer gemeinsamen Verbindung (31) an oder nahe einem Endabschnitt (Y) des flexiblen Substrats (20) gegenüber dem ersten Abschnitt (11) verbunden sind.

## Revendications

1. Capteur de température (30) comprenant une unité de capteur (10) formée sur un substrat flexible (20), dans lequel le substrat flexible (20) comporte une première partie (11), laquelle est située sur une partie d'extrémité (X) du substrat flexible (20) et dans laquelle l'unité de capteur (10) est formée, et une deuxième partie (12) adjacente à la première partie (11) dans une direction distale depuis la partie d'extrémité (X) et présentant une épaisseur maximale (d₂) entre une première surface (A₂) et une deuxième surface (B₂) tournées l'une vers l'autre, une surface (A₁) de la première partie (11) étant opposée à l'unité de capteur (10) et la première surface (A₂) de la deuxième partie (12) étant sur le même plan, au moins la première surface (A₂) de la deuxième partie (12) formant une surface de détection en contact avec un objet dont la température est à détecter, et une épaisseur totale (d₁) de la première partie (11) et de l'unité de capteur (10) étant inférieure à l'épaisseur maximale (d₂) de la deuxième partie (12) .

2. Capteur de température (30) selon la revendication 1, dans lequel un rapport entre l'épaisseur totale (d₁) de la première partie (11) et de l'unité de capteur (10) et l'épaisseur maximale (d₂) de la deuxième partie (12) est inférieur ou égal à 0,83, et une longueur (L₁) de la première partie (11) est inférieure ou égale à 9,5 mm.

3. Capteur de température (30) selon la revendication 1 ou 2, dans lequel le substrat flexible (20) comporte en outre une troisième partie (13) adjacente à la deuxième partie (12) dans la direction distale depuis la partie d'extrémité (X) et présentant une épaisseur (d₃) inférieure à l'épaisseur maximale (d₂) entre une troisième surface (A₃) et une quatrième surface (B₃) tournées l'une vers l'autre, et la quatrième surface (B₃) de la troisième partie (13) et la deuxième surface (B₂) de la deuxième partie (12) sont sur le même plan.

4. Capteur de température (30) selon la revendication 3, dans lequel la troisième surface (A₃) de la troisième partie (13) est exposée.

5. Capteur de température (30) selon la revendication 3, dans lequel la troisième surface (A₃) de la troisième partie (13) est recouverte d'un matériau d'isolation thermique (15) ou d'un matériau à dissipation de chaleur (15) qui est en contact avec l'objet, dont la température est à détecter.

6. Capteur de température (30) selon l'une quelconque de revendications 3 à 5, dans lequel la deuxième partie (12) comporte une partie d'expansion (12a) depuis la première partie (11), une partie d'expansion (12b) depuis la troisième partie (13), et un joint (12c) qui relie ces parties d'expansion (12a, 12b).

7. Capteur de température (30) selon la revendication 6, dans lequel la première partie (11) et la partie d'expansion (12a) depuis la première partie (11) comportent un premier substrat (21) et deux parties d'électrode (5) formées sur le premier substrat (21) et s'étendant depuis l'unité de capteur (10), la troisième partie (13) et la partie d'expansion (12b) depuis la troisième partie (13) comportent un deuxième substrat (23) et deux fils (25) formés sur le deuxième substrat (23),
et les deux parties d'électrode (5) et les deux fils (25) sont raccordés électriquement l'un à l'autre par le joint (12c) intercalé entre ceux-ci.

8. Capteur de température (30) selon l'une quelconque des revendications 1 à 7, dans lequel l'unité de capteur (10) comporte une couche de thermistance (1), deux électrodes (3) qui sont en contact avec la couche de thermistance (1) et sont espacées l'une de l'autre, et une couche de recouvrement (7) le cas échéant.

9. Ensemble de capteurs de température (40) comprenant une pluralité des capteurs de température (30) selon l'une quelconque des revendications 1 à 8, la pluralité de capteurs de température (30) étant reliés à un raccord commun (31) sur ou à proximité d'une partie d'extrémité (Y) du substrat flexible (20) opposée à la première partie (11).
